# EUROPÄISCHE PATENTSCHRIFT

(11) **EP 2 743 112 B1**
(45) Veröffentlichungstag und Bekanntmachung des Hinweises auf die Patenterteilung: **21.10.2015**
(21) Anmeldenummer: 13195982.7
(22) Anmeldetag: 06.12.2013
(51) Int. Cl.: B60K 1/00

(54) **Übersetzungs- und Ausgleichsgetriebe sowie Motor- und Getriebeeinheit**
speed change differential gear and motor transmission unit
transmission avec differentiel et unité de transmission avec moteur

(30) Priorität: 17.12.2012 DE 102012024752
(43) Veröffentlichungstag der Anmeldung: 18.06.2014
(73) Patentinhaber: Volkswagen Aktiengesellschaft, 38440 Wolfsburg (DE)
(72) Erfinder: Petersen, Rainer, 38444 Wolfsburg (DE); Möckel, Jörg, 38524 Sassenburg (DE); Lutz, Andreas, 38100 Braunschweig (DE); Hanke, Stefan, 38126 Braunschweig (DE)

(56) Entgegenhaltungen:
- EP-A1- 2 511 570
- CN-U- 201 672 012
- DE-A1-102011 007 259

## Beschreibung

Die Erfindung betrifft ein Übersetzungs- und Ausgleichsgetriebe mit einem Gehäuse, mit einer Eingangswelle und zwei koaxial zu der Eingangswelle angeordneten Ausgangswellen, wobei ein Übersetzungsabschnitt und ein Ausgleichsabschnitt vorgesehen sind, wobei der Übersetzungsabschnitt zwei Planetenstufen aufweist, nämlich eine Eingangsstufe und eine Laststufe aufweist, wobei das Sonnenrad der Eingangsstufe mit der Eingangswelle wirksam verbunden ist, wobei die Laststufe ein gehäusefestes Hohlrad aufweist und deren Sonnenrad über einen Steg mit mindestens einem Planetenrad der Eingangsstufe wirksam verbindbar bzw. verbunden ist und wobei mindestens ein Planetenrad der Laststufe über einen Steg wirksam mit einer Eingangswelle des Ausgleichsabschnitt verbunden ist. Weiterhin betrifft die Erfindung eine Motor- und Getriebeeinheit mit einem Elektromotor und einem koaxial an den Elektromotor angeflanschten, zuvor genannten Übersetzungs- und Ausgleichsgetriebe.

Übliche Bauformen von Getrieben in Elektro-Fahrzeugen (E-Fahrzeugen) sind an die herkömmlichen Getriebe für die Kopplung mit Verbrennungskraftmotoren angelehnt. Diese Getriebe weisen einen Achsversatz zwischen Eingangs- und Ausgangswelle, also zwischen der Rotorwelle des Elektromotors (E-Motor) und den Radwellen auf. Die Flanschwellen zu den Rädern werden im Wesentlichen achsparallel zu den Antriebsmaschinen (E-Motor bzw. Verbrennungsmotor) an diesen entsprechend vorbei geführt. Eine Abkopplung der Antriebsmaschine erfolgt hier meist auf die klassische Weise, nämlich durch eine direkt hinter dem E-Motor angeordnete reibschlüssige Kupplung. Diese Ausführung der Abkopplungsvorrichtung wird bspw. in der DE 10 2007 043 016 A1 beschrieben.

Für viele elektrische Fahrzeuganwendungen bzw. Hybrid-Antriebe reicht es aus, den E-Motor mit nur einer festen Getriebeübersetzung an die Räder zu binden bzw. mit den Rädern wirksam zu verbinden. Der E-Motor stellt vom Stillstand des Fahrzeugs/Kraftfahrzeugs an ein hohes Drehmoment zur Verfügung und erspart damit das in den herkömmlichen Antriebssträngen (mit Verbrennungsmotoren) erforderliche Anfahrelement. Das Getriebe wandelt das Drehmoment des E-Motors, so dass das Fahrzeug an seiner Haftgrenze wandelt das Drehmoment des E-Motors, so dass das Fahrzeug an seiner Haftgrenze anfahren kann. In einigen Fahrzeuganwendungen reicht die dadurch festgelegte Getriebeübersetzung aber nicht aus, um bei maximaler E-Motordrehzahl die gewünschte Fahrzeugendgeschwindigkeit auch zu erreichen. Hier muss dann eine weitere Getriebeübersetzung in diesen Fällen dafür sorgen, dass mit dem Elektroantrieb, also mit dem E-Motor neben der geforderten "Anfahrperformance" auch die - im Endeffekt - gewünschte Endgeschwindigkeit des Kraftfahrzeugs realisierbar wird. Bisher sind allerdings "Zweiganggetriebe" für reine Elektrofahrzeuge von den Getriebeherstellern nur in der oben beschriebenen achsparallelen Bauweise realisiert worden.

So sind auch koaxial zum Elektromotor aufgebaute Getriebe bekannt, die einen Übersetzungsabschnitt mit zwei Planetenstufen (Planetengetriebe) aufweisen. Hierbei weist der Übersetzungsabschnitt separate koaxial hintereinander geschaltete Planetengetriebe auf, wobei das so aufgebaute Getriebe nur geringen radialen und axialen Bauraum benötigt und das Getriebe insbesondere aber problemlos die erforderliche Gesamtübersetzung realisiert. Derzeit werden unterschiedliche Ausführungsformen dieses Getriebes entwickelt und weiterentwickelt, so ist bspw. eine Kupplungsvorrichtung bekannt, die den Elektromotor vom Antriebsstrang eines derartigen Getriebes abkoppelt, wobei die Abkopplungsvorrichtung elektromechanisch betätigt wird und im wesentlichen "bauraumneutral" in die das Getriebe integrierbar ist.

Aus der EP 2 511 570 A1 und der gattungsbildenden CN 201 672 012 U sind solche koaxial hintereinander geschaltete Planetengetriebe mit einer Eingangsstufe und einer Laststufe bekannt, bei denen das Hohlrad der Eingangsstufe mittels einer ersten Reibkupplung mit dem Gehäuse und mittels einer zweiten Reibkupplung mit dem Steg der Eingangsstufe gekoppelt werden kann. Ähnliche Anordnung ist aus der DE 10 2011 007 259 A1 bekannt, hier wird aber mittels der zweiten Reibkupplung das Hohlrad mit dem Sonnenrad der Eingangsstufe gekoppelt. Somit können zwei unterschiedliche Übersetzungen gewählt werden oder eine Abkopplung der Antriebmaschine stattfinden. Verwendung von zwei separaten Reibkupplungen benötigt viel Bauraum und überdies muss wenigstens eine der Reibkupplung immer mit einer Betätigungskraft betätigt werden, was energieintensiv ist und der Energieverbrauch des Fahrzeugs erhöht.

Im Stand der Technik sind aber noch andere Hybridantriebssysteme für Kraftfahrzeuge bekannt. So ist aus der DE 44 31 929 C1 ein Getriebe bekannt, das die Anfahrfähigkeit eines Kraftfahrzeuges dadurch verbessert, weil zwischen dem Antriebsritzel und einem weiteren Zahnrad auf der Zwischenwelle ein separates Reduktionsgetriebe, bspw. ein Planetengetriebe angeordnet ist.

Weiterhin ist aus der EP 0 536 230 B1 ein Getriebe für ein Kraftfahrzeug bekannt, das teilweise als Planetengetriebe ausgebildet ist, wobei mit Hilfe von Kopplungsvorrichtungen, insbesondere von Schiebemuffen das Hohlrad des Planetengetriebes mit unterschiedlichen Komponenten koppelbar ist.

Weiterhin ist aus der DE 32 30 121 A1 ein Hybridantriebssystem für Fahrzeuge bekannt, bei dem dann um eine besonders wirkungsvolle und effektive Funktion eines derartigen Antriebssystems zu erreichen, die schwungradlos ausgeführte Kurbelwelle des Hubkolben-Antriebsmotor geltenden Rotor des Elektromotors und dieser über eine weitere Kupplung mit der Eingangswelle des Getriebes verbunden bzw. verbindbar ist. Der konstruktive Aufwand ist hier allerdings sehr groß.

Schließlich ist ein Getriebe für Kraftfahrzeuge aus der DE 199 03 936 A1 bekannt, das zwei Planetengetriebe aufweist, die jeweils mit einer Getriebewelle gekoppelt sind, auf denen Eingangszahnräder für verschiedene Getriebeübersetzungen angeordnet sind. Die hier angeordneten Planetengetriebe sind in einer gleichen Ebene angeordnet, wobei jedes Planetengetriebe mit einer separaten Elektromaschine gekoppelt werden soll. Auch hier ist der konstruktive Aufwand, insbesondere mit zwei vorzusehenden E-Motoren sehr groß.

Schließlich ist aus der DE 100 01 602 A1 ein Getriebe bekannt, bei dem ein Planetensatz bzw. ein Planetengetriebe verwendet wird, um die Zahl der zu realisierenden Gänge zu verdoppeln, sowie aus der DE 197 23 776 A1 ein elektrischer Einzelradantrieb für ein Fahrzeug bekannt ist, der einen großen Geschwindigkeitsbereich des Fahrzeuges realisieren soll, wobei zwischen dem Elektromotor und dem Endantriebsgetriebe ein Übertragungsgetriebe angeordnet ist, das zwischen wenigstens zwei Drehzahlübertragungsstufen umschalten kann.

Problematisch bei den im Stand der Technik bekannten Hybridantrieben bzw. den hierfür eingesetzten Getrieben ist, dass der Konstruktionsaufwand und der hierfür notwendige Bauraum sehr groß ist. Dies gilt insbesondere dann, wenn um einen hohen Fahrzeugsgeschwindigkeitsbereich eines Kraftfahrzeuges abzudecken, das Getriebe "zweigängig" ausgeführt werden soll, also mindestens zwei Gänge bzw. zwei Gangstufen mit dem entsprechenden Getriebe realisiert werden sollen. Die hierfür vorgesehenen Schaltvorrichtungen und deren Anordnung bzw. Komponenten benötigen einen sehr hohen Bauraum bei den bisher bekannten Getrieben.

Der Erfindung liegt daher die Aufgabe zugrunde, das eingangs genannte Übersetzungs- und Ausgleichsgetriebe so auszugestalten und weiterzubilden, dass mit Hilfe des Getriebes einerseits zwei Gangstufen realisierbar sind, andererseits eine Vergrößerung des Bauraumbedarfs des Getriebes im wesentlichen vermieden ist, wobei zugleich die Einsatzflexibilität und der Wirkungsgrad des Getriebes verbessert sind.

Die zuvor aufgezeigte Aufgabe wird nun dadurch gelöst, dass über eine entsprechend vorgesehene und/oder angeordnete Kopplungsvorrichtung das Hohlrad der Eingangsstufe wirksam und drehfest mit dem Gehäuse oder mit einem Planetenträger des Planetenrades der Eingangsstufe koppelbar bzw. entkoppelbar ist.

Durch die insbesondere formschlüssig ausgebildete Kopplungsvorrichtung und deren jeweilige Komponenten, kann diese insbesondere "bauraumneutral" in das Getriebe integriert werden. Hierfür können entsprechend bereits vorhandene Flanschlagen und/oder bereits vorhandene Gehäuseflächen genutzt werden, sowie auch bereits bestehende Verzahnungen der Eingangswelle und/oder anderer Wellen mitgenutzt werden. Das Umschalten der ersten Gangstufe zur zweiten Gangstufe des Getriebes kann im Wesentlichen lastfrei erfolgen, weil die Relativdrehzahlen vom Antriebsmotor synchronisiert werden können. Die Abkopplung erfolgt in der Schaltstellung "neutral" der Kopplungsvorrichtung. Zusätzlich ist zum Abschleppen des Fahrzeuges auch die Möglichkeit der "manuellen" Abkopplung gegeben bzw. realisiert (mechanisch oder elektrisch). Wie die folgenden Ausführungen noch ausführlicher darlegen werden weist das erfindungsgemäße Übersetzungs- und Ausgleichsgetriebe zwei hintereinander geschaltete Planetenstufen (Planetengetriebe), nämlich eine Eingangs- und Laststufe auf. Diese beiden Planetenstufen sind durch entsprechende Bindungen (Stege) miteinander fest gekoppelt und realisieren so das gewünschte Übersetzungsverhältnis. Weitere Übersetzungen, nämlich eine erste und zweite Gangstufe können generiert werden, wenn diese Bindungen aufgelöst bzw. geändert werden, nämlich mit der zuvor erwähnten Kopplungsvorrichtung. Auf diese Weise können dann mehrere, hier vzw. zwei Gangstufen realisiert werden, ohne dass weitere Zahnradstufen integriert werden müssen. Den für Elektroantriebe im Allgemeinen geforderten großen Übersetzungssprung zwischen den zwei Gangstufen erreicht man insbesondere dann, wenn eine Planetenstufe komplett kurzgeschlossen wird (verblockt umläuft). Dies sollte vzw. im höheren Gang, also bei der Realisierung der zweiten Gangstufe der Fall sein, da hier im Allgemeinen längere Verweildauern auftreten. Bei der hier realisierten bevorzugten Ausführungsform ist nun die erste Gangstufe dadurch realisiert, dass die Kopplungsvorrichtung das Hohlrad der Eingangsstufe mit dem Gehäuse wirksam und drehfest koppelt und die zweite Gangstufe ist dadurch realisiert, dass die Kopplungsvorrichtung das Hohlrad der Eingangsstufe mit dem Planetenträger des Planetenrades bzw. des Planetensatzes der Eingangsstufe wirksam und drehfest koppelt. Dies darf im Folgenden ausführlich erläutert werden, insbesondere sind die eingangs genannten Nachteile vermieden und entsprechende Vorteile erzielt, wobei zusätzlich noch eine Abkopplung des E-Motors für einen energetisch günstigen "Segelbetrieb" eines einachsig betriebenen Fahrzeuges bzw. zur Effizienzsteigerung eines zwei-achsig betriebenen Fahrzeuges (durch Abkopplung einer Achse im Teillastbetrieb) genutzt werden kann. Das Ausgleichsabschnitt kann vorteilhaft als Stirnraddifferential ausgebildet sein, insbesondere als ein Doppelplanetenradsatz, bei dem der Steg als die Eingangswelle dient und jede Sonne mit einer Ausgangswelle verbunden ist. In einer ganz vorteilhaften Variante können die die Planeten der Laststufe tragende Bolzen gemeinsam mit den Bolzen, die die erste Gruppe den Planeten des Stirnraddifferentials tragen, sein. Im Ergebnis sind die Einsatzmöglichkeiten des erfindungsgemäßen Getriebes erhöht, wobei der Bauraum entsprechend minimiert ist.

Es gibt nun eine Vielzahl von Möglichkeiten das erfindungsgemäße Übersetzungs- und Ausgleichsgetriebe in vorteilhafter Art und Weise auszugestalten und weiterzubilden, hierfür darf zunächst auf die dem Patentanspruch 1 nachgeordneten Patentansprüche verwiesen werden. Im Folgenden darf nun die bevorzugte Ausführungsform der Erfindung anhand der nachfolgenden Beschreibung und der dazugehörenden Zeichnungen näher erläutert werden.

In der Zeichnung zeigt
- Fig. 1: eine schematische Darstellung einer Antriebseinheit eines Kraftfahrzeuges mit der erfindungsgemäßen Motor- und Getriebeeinheit mit der Darstellung der Positionierung der Kopplungsvorrichtung in ihrer Neutralstellung.
- Fig. 2: eine schematische Darstellung einer Antriebseinheit eines Kraftfahrzeuges mit der erfindungsgemäßen Motor- und Getriebeeinheit mit der Darstellung der Positionierung der Kopplungsvorrichtung zur Realisierung der ersten Gangstufe, nämlich mit der Kopplung des entsprechenden Hohlrades mit dem Gehäuse,
- Fig. 3: in schematischer Darstellung eine Antriebseinheit eines Kraftfahrzeuges mit der erfindungsgemäßen Motor- und Getriebeeinheit mit der Darstellung der Positionierung der Kopplungsvorrichtung zur Realisierung der zweiten Gangstufe, nämlich mit Kopplung des entsprechenden Hohlrades mit dem Planetenträger des Planetenrades der Eingangsstufe,
- Fig. 4: in schematischer, teils geschnittener Darstellung die wesentlichen Komponenten des Getriebes mit der Kopplungsvorrichtung in der Neutralstellung,
- Fig. 5: in schematischer, teils geschnittener Darstellung die Komponenten aus Fig. 4 mit der Kopplungsvorrichtung, wobei das Hohlrad der Eingangsstufe mit dem Gehäuse wirksam gekoppelt ist,
- Fig. 6: im Wesentlichen die in den Fig. 4 und 5 dargestellten Komponenten, in schematischer Darstellung mit der Kopplungsvorrichtung, wobei das Hohlrad der Eingangsstufe mit dem Planetenträger des Planetenrades der Eingangsstufe gekoppelt ist, und
- Fig. 7: die wesentlichen Komponenten der Kopplungsvorrichtung, nämlich die Schiebemuffe bzw. den Koppelring sowie die Schaltgabel und weitere Komponenten in schematischer leicht perspektivischer Darstellung.

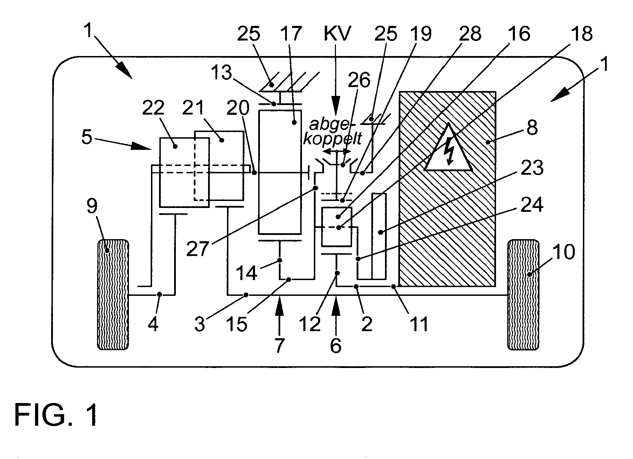

Die Fig. 1 bis 3 zeigen zunächst in schematischer Darstellung ein Übersetzungs- und Ausgleichsgetriebe 1, für ein Fahrzeug, insbesondere für ein hier nicht im Einzelnen dargestelltes Kraftfahrzeug, wobei auch das Gehäuse des Übersetzungs- und Ausgleichsgetriebes 1 nur schematisch angedeutet ist.

Das Übersetzungs- und Ausgleichsgetriebe 1 weist eine Eingangswelle 2 und zwei koaxial zu der Eingangswelle 2 angeordnete Ausgangswellen 3 und 4 auf. Das Übersetzungs- und Ausgleichsgetriebe 1 weist einen Übersetzungsabschnitt und einen als Stirnraddifferential 5 ausgebildeten Ausgleichsabschnitt auf. Der hier nicht näher bezeichnete Übersetzungsabschnitt weist zwei Planetenstufen (insbesondere zwei axial hintereinander geschaltete Planetengetriebe) nämlich eine Eingangsstufe 6 und eine Laststufe 7 auf.

In der in den Fig. 1 bis 3 gezeigten üblichen "Halbdarstellung" sind die entsprechenden Elemente des Übersetzungs- und Ausgleichsgetriebes 1 gut erkennbar. In den Fig. 1 bis 3 ist daher nur die "obere Hälfte" der an sich rotationssymetrischen Vorrichtung, nämlich der wesentlichen rotierenden Komponenten des Übersetzungs- und Ausgleichgetriebes 1 schematisch dargestellt. Die hier dargestellte Antriebseinheit, nämlich das hier dargestellte Übersetzungs- und Ausgleichsgetriebe 1 dient der Übertragung eines von einem Antriebsmotor, insbesondere eines Elektromotors 8 erzeugten Drehmomentes auf die Antriebsräder, auf die Räder 9 und 10 einer angetriebenen Achse eines Kraftfahrzeuges.

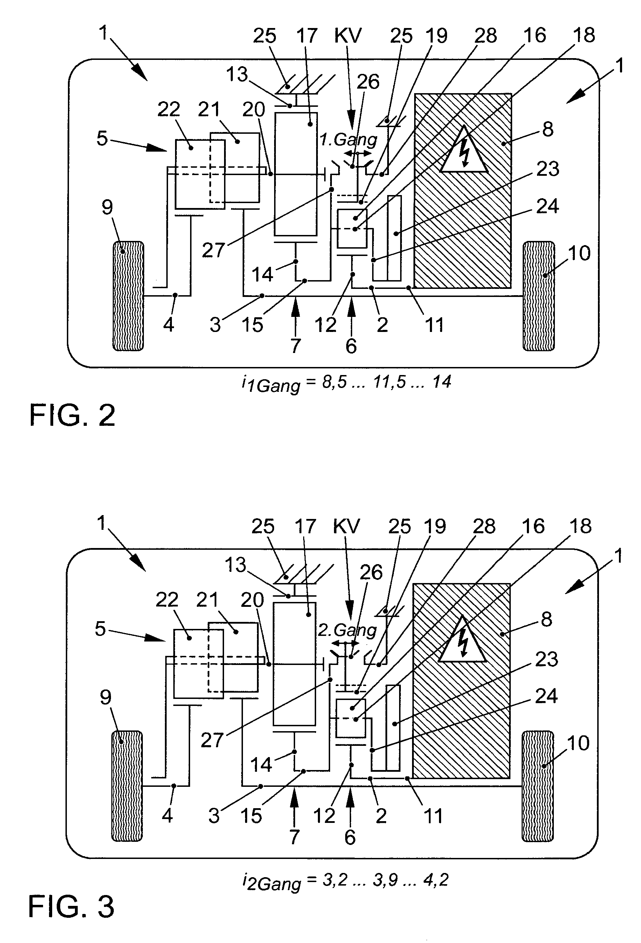

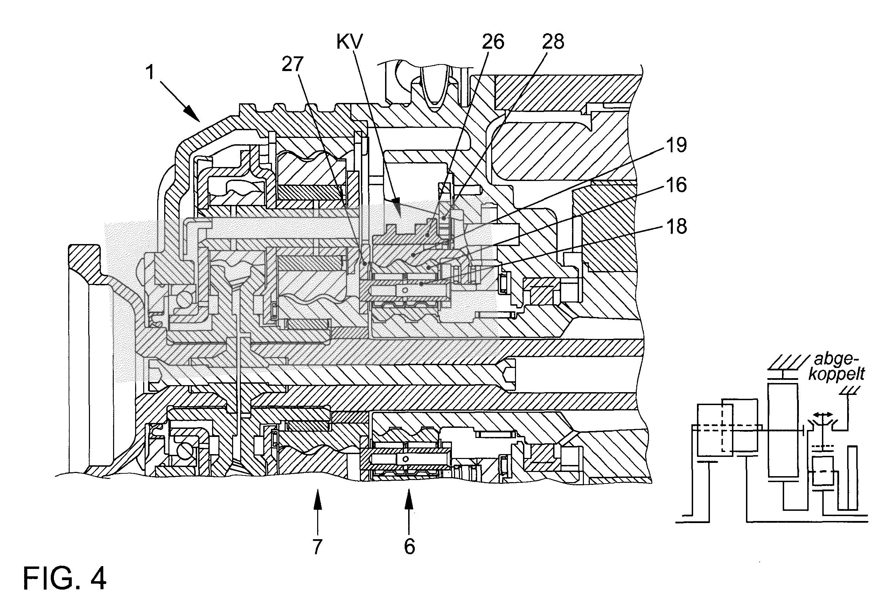

Die Fig. 1 bis 3 zeigen nun schematisch die wesentlichen Komponenten des Übersetzungs- und Ausgleichsgetriebes 1, wobei die Positionierung der Kopplungsvorrichtung KV, auf die im Folgenden noch näher eingegangen wird, nämlich die Positionierung der Kopplungsvorrichtung KV in Fig. 1 bzw. in Fig. 2 und in Fig. 3 schematisch dargestellt ist. Die Positionierung und auch die Ausbildung der hier dargestellten Kopplungsvorrichtung KV wird aber im Folgenden, insbesondere anhand der Fig. 4 bis 6 nochmals ausführlich erläutert werden. Zuvor darf auf weitere Komponenten des hier dargestellten Übersetzung- und Ausgleichsgetriebes 1 noch näher eingegangen bzw. diese im Folgenden noch näher erläutert werden:
Das bei der Übertragung des Drehmomentes vom Antriebsmotor, hier vom Elektromotor 8 auf die Räder 9 und 10 dienende Übersetzungs- und Ausgleichsgetriebe 1 setzt sich im wesentlichen aus drei funktionalen Gruppen zusammen. Es sind dies die Eingangsstufe 6, die Laststufe 7 und eine Ausgleichsstufe bzw. ein Ausgleichsabschnitt, der hier auch als Stirnraddifferential 5 bezeichnet werden kann bzw. entsprechend ausgebildet ist. Die einzelnen Stufen 6, 7 und 5 sind in der aufgezählten Reihenfolge benachbart und kompakt nebeneinander bzw. axial benachbart zueinander angeordnet.

Der Antriebsmotor, hier der Elektromotor 8 weist eine Ausgangswelle 11 auf, die konzentrisch zu dessen nicht näher dargestellten Wicklungen angeordnet ist, insbesondere als Hohlwelle ausgebildet ist. An diese Ausgangswelle 11 schließt sich die ebenfalls als Hohlwelle ausgebildete Eingangswelle 2 des Übersetzungs- und Ausgleichsgetriebes 1 an, beide Komponenten können aber auch als ein integrales Bauteil ausgebildet sein. Der Übersetzungsabschnitt weist - wie bereits erwähnt - zwei Planetenstufen auf, nämlich die Eingangsstufe 6 und die Laststufe 7. Das Sonnenrad 12 der Eingangsstufe 6 ist mit der Eingangswelle 2 wirksam verbunden, wobei die Laststufe 7 ein gehäusefestes Hohlrad 13 aufweist und das Sonnenrad 14 der Laststufe 7 über einen Steg 15 mit mindestens einem Planetenträger 18 des Planetenrades 16, insbesondere mit dem Planetensatz der Eingangsstufe 6 wirksam verbindbar bzw. verbunden ist. Hierbei können der Steg 15 und der Planetenträger 18 als separate Bauteile oder als integrierte Bauteile bzw. als integrales Bauteil ausgebildet sein, je nach Ausführungsform. Schließlich ist mindestens ein Planetenrad 17 der Laststufe 7 bzw. der Planetensatz über einen Steg 20 (bzw. entsprechenden Planetenträger) wirksam mit einer Eingangswelle des Stirnraddifferentials 5 verbunden.

Aus den vorstehenden Erläuterungen ergibt sich, dass die Eingangsstufe 6 ein Sonnenrad 12, einen Planetensatz, insbesondere mindestens ein Planetenrad 16, vorzugsweise mehrere Planetenräder 16, sowie ein - nun erwähntes - Hohlrad 19 aufweist, wobei die Laststufe 7 ein Sonnenrad 14, ein Planetensatz, insbesondere zumindest ein Planetenrad 17, vorzugsweise mehrere Planetenräder 17 und ein Hohlrad 13 aufweist, so wie dies aus den Fig. 1 bis 3 ersichtlich ist.

Die Eingangsstufe 6 und Laststufe 7 bilden gemeinsam den Übersetzungsabschnitt des Übersetzungs- und Ausgleichsgetriebes 1 mit einer entsprechenden Gesamtübersetzung.

Als Ausgangselement des Übersetzungsabschnitts dient der Steg 20 der Laststufe 7. Über diesen Steg 20 ist der Übersetzungsabschnitt mit dem Stirnraddifferential 5 wirksam verbunden, insbesondere hier mit einem doppelten Satz von Planetenrädern 21 und 22 verbunden, die miteinander kämmen. Über die übliche bekannte Anordnung des Stirnraddifferentials 5 übertragen die Planetenräder 21 und 22 die entsprechende Rotation auf die jeweilige Ausgangswelle 3 bzw. 4 des Übersetzungs- und Ausgleichsgetriebes 1.

Wie aus den Fig. 1 bis 3 ersichtlich ist, ist zusätzlich noch ein Parksperrenrad 23 vorgesehen, zur Realisierung einer Parksperre, wobei das Parksperrenrad 23 über einen entsprechenden Steg 24 (bzw. eine Parksperrenwelle) mit dem Planetenrad 16 bzw. dem entsprechenden Planetensatz der Eingangsstufe 6 verbunden ist und mit einer im Gehäuse 25 vorgesehenen Parksperrenvorrichtung in Eingriff steht.

Grundsätzlich gilt, damit ein entsprechendes Drehmoment über eine Planetenstufe übertragen werden kann, müssen die entsprechenden Komponenten entsprechend wirksam verbunden sein, d. h. die freie Rotation bspw. eines Sonnenrade oder eines Hohlrades würde zu einer Entkopplung der entsprechenden Planetenstufe führen, so dass kein Drehmoment mehr übertragen werden kann.

Die eingangs genannten Nachteile sind nun dadurch vermieden, dass über eine entsprechend vorgesehene und/oder angeordnete Kopplungsvorrichtung KV das Hohlrad 19 der Eingangsstufe 6 wirksam und drehfest mit dem Gehäuse 25 oder mit einem Planetenträger 18 des Planetenrades 16 bzw. mit dem Planetensatz der Eingangsstufe 6 koppelbar bzw. hiervon entkoppelbar ist. Mit diesen zuvor beschriebenen Alternativen werden dann die erste und zweite Gangstufe realisiert.

Die Fig. 1 zeigt die Kopplungsvorrichtung KV in ihrer Neutralstellung, die Fig. 2 zeigt die Kopplungsvorrichtung KV, wobei das Hohlrad 19 der Eingangsstufe 6 mit dem Gehäuse 25 gekoppelt ist und die Fig. 3 zeigt die Kopplungsvorrichtung KV in der Positionierung, wo das Hohlrad 19 der Eingangsstufe 6 mit dem Planetenträger 18 des Planetenrades 16 bzw. mit dem Planetensatz der Eingangsstufe 6 wirksam gekoppelt ist. Im letzteren Fall läuft die Eingangsstufe 6 "als Block" um und realisiert so die weitere, zweite Gangstufe des Übersetzungs- und Ausgleichsgetriebes 1. Dies bedeutet, für den Fall, dass das Hohlrad 19 der Eingangsstufe 6 mit dem Gehäuse 25 wirksam, insbesondere drehfest gekoppelt ist, wird die erste Gangstufe im Übersetzungs- und Ausgleichsgetriebe 1 realisiert, die vzw. ein Übersetzungsverhältnis zwischen 8,6 bis 13,6, insbesondere 11,4 realisiert, wobei die zweite Gangstufe im Getriebe dann realisiert ist, wenn das Hohlrad 19 der Eingangsstufe 6 drehfest verbunden ist mit dem Planetenträger 18 des Planetenrades 16 bzw. mit dem Planetensatz der Eingangsstufe 6 und somit die ganze Stufe "als Block" umläuft, im letzteren Fall ist dann eine Gesamtübersetzung im Getriebe vzw. zwischen 3,2 bis 4,1, insbesondere von 3,91 realisiert.

Zwar zeigen die Fig. 1 bis 3, dass sich die Kopplungsvorrichtung KV bauraumneutral im Übersetzungs- und Ausgleichsgetriebe 1 integrieren lässt, wie nun die konkrete technische Umsetzung/Anordnung der jeweiligen Komponenten realisiert wird, dies wird durch die Fig. 4 bis 6 dargestellt, auf die im Folgenden nun näher eingegangen werden darf:
Zunächst ist die Kopplungsvorrichtung KV so ausgebildet und/oder ausgeführt, dass die Kopplung bzw. die Entkopplung der entsprechenden Elemente über vorgesehene Formschlusselemente realisiert wird, insbesondere daher eine formschlüssige Kopplung realisiert wird. Die Kopplungsvorrichtung KV weist nun einen Koppelring 26, ein Koppelrad 27 und einen Gehäusering 28 auf (der auch als zweites Koppelrad bezeichenbar ist).

Die Fig. 4 bis 6 zeigen in deutlicher Form die Kopplungsvorrichtung KV mit dem jeweiligen Komponenten, nämlich dem Koppelring 26, dem Koppelrad 27 und dem Gehäusering 28. Wie die Fig. 4 bis 6 zeigen muss auch bei unterschiedlicher Positionierung der Kopplungsvorrichtung KV, nämlich des Kopplungsringes 6, (der auch als Synchronring bezeichenbar ist), nämlich wenn dieser nach rechts oder nach links verschoben wird, der Bauraum des Getriebes, also des Übersetzungs- und Ausgleichsgetriebes 1 hier nicht vergrößert werden, was insbesondere die bereits eingangs genannten Vorteile mit sich bringt. Da die Kopplungsvorrichtung KV bzw. deren Komponenten so ausgebildet sind, dass die Kopplung bzw. Entkopplung der entsprechenden Elemente/Komponenten über vorgesehene Formschlusselemente realisiert wird, die keinen unnötig großen Bauraumbedarf einnehmen, können die eingangs beschriebenen Vorteile entsprechend realisiert werden.

Unter Bezugnahme auf die Fig. 4 bis 6 darf nun folgendes ausgeführt werden:
Die Kopplungsvorrichtung KV ist nun so ausgebildet, dass diese zunächst den Koppelring 26 aufweist, der in Axialrichtung verschiebbar ist und mit dem Hohlrad 19 der Eingangsstufe 6 drehfest verbunden ist. Hierzu weist der Innenumfang des Koppelringes 26 eine innere und der Außenumfang des Hohlrades 19 eine äußere Steckverzahnung auf, die miteinander in Eingriff stehen.

Fig. 4 zeigt die Kopplungsvorrichtung KV in ihrer Neutralstellung, hier ist der Koppelring 26 weder mit dem Koppelrad 27 noch mit dem Gehäusering 28 drehfest verbunden. Da aber der Koppelring 26 axial auf dem Hohlrad 19 verschiebbar angeordnet ist und der Koppelring 26 und das Hohlrad 19 eine miteinander in Eingriff stehende Steckverzahnung aufweisen kann nun mit Hilfe des Koppelringes 26 das Hohlrad 19 drehfest verbunden werden, nämlich entweder mit dem Koppelrad 27 oder mit dem Gehäusering 28. Hierbei ist der Gehäusering 28 drehfest mit dem Gehäuse 25 verbunden, denkbar ist auch, dass der Gehäusering 28 als integraler Bestandteil des Gehäuses 25 ausgebildet ist.

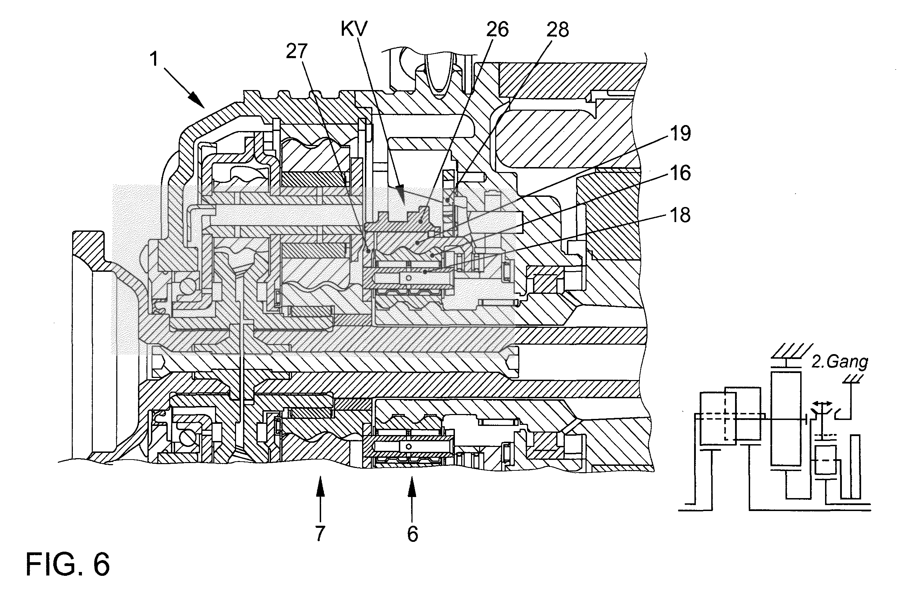

Das Koppelrad 27 ist wirksam mit dem Planetenträger 18 des Planetenrades 16 der Eingangsstufe 6 verbunden, wie aus den Fig. 4 bis 6 ersichtlich. Um nun das Koppelrad 27 wirksam mit dem Planetenträger 18 bzw. mit den Planetenträgern 18 des Planetenrades 16 der Eingangsstufe 6 zu verbinden ist am Außenumfang des Koppelrades 27 eine zu der Steckverzahnung des Koppelringes 26 korrespondierende Verzahnung vorgesehen. Bei einer Verschiebung des Koppelringes 26 nach links, so wie in Fig. 6 gezeigt, kommt also die Steckverzahnung am Innenumfang des Koppelringes 26 mit der an dem Außenumfang des Koppelrades 27 vorgesehenen Verzahnung in Eingriff, so dass beide Komponenten drehfest miteinander verbunden sind, und im Endeffekt dann das Hohlrad 19 der Eingangsstufe 6 drehfest mit Planetenträgern 18 der Planetenräder 16 der Eingangsstufe 6 verbunden ist, so dass für diesen Fall die ganze Planetenstufe "als Block" umläuft und so dann auch die zweite Gangstufe des Getriebes, nämlich des Übersetzungs- und Ausgleichsgetriebes 1 realisiert bzw. eingelegt ist. Die Fig. 6 korrespondiert daher zu der schematischen Darstellung der Fig. 3. Zur wirksamen Kopplung bzw. Realisierung der zweiten Gangstufe ist daher der Koppelring 26 über das Koppelrad 27 verschiebbar so wie in Fig. 6 dargestellt (nämlich hier nach links verschoben).

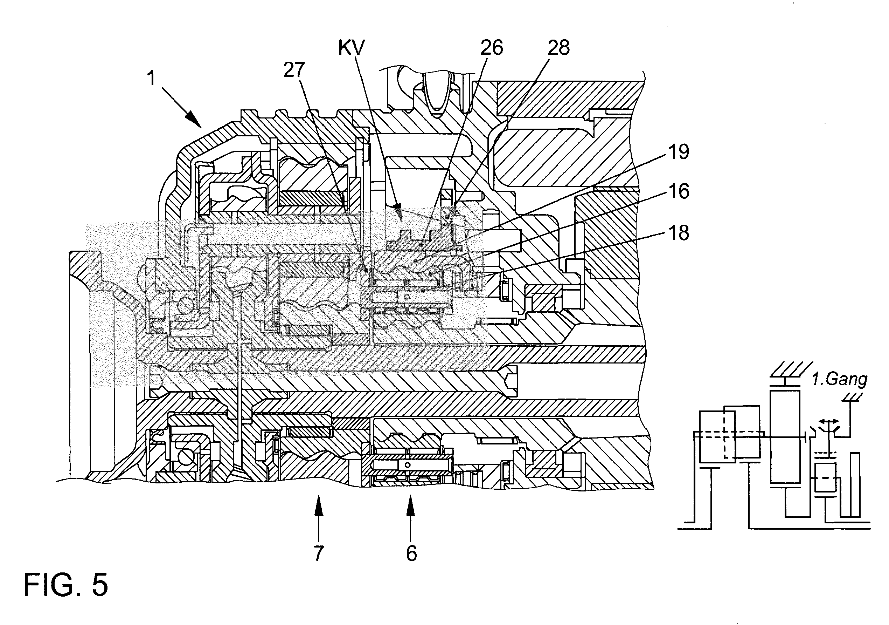

Wie die Fig. 5 zeigt kann der Koppelring 26 auch nach rechts verschoben werden, für diesen Fall kommt der Koppelring 26 mit dem Gehäusering 28 in Eingriff. Wie bereits erwähnt ist der Gehäusering 28 vzw. drehfest an oder im Gehäuse 25 angeordnet und/oder befestigt und weist eine hier nicht näher bezeichnete Innenverzahnung auf. Der Koppelring 26 weist am äußeren Umfang (vzw. in seinem rechten Bereich) eine mit der Innenverzahnung des Gehäuseringes 28 in Eingriff bringbare Außenverzahnung auf und ist zur wirksamen Kopplung zumindest teilweise in den Gehäusering 28 einschiebbar. Die wirksame Kopplung des Koppelringes 26 und Gehäuseringes 28 ist hier in Fig. 5 dargestellt, wobei Fig. 5 im Wesentlichen der schematischen Darstellung der Fig. 2 entspricht. Die Fig. 2 und 5 zeigen daher die Realisierung der ersten Gangstufe im Getriebe, hier im Übersetzungs- und Ausgleichsgetriebe 1.

Die Fig. 1 bis 6 zeigen daher das Übersetzungs- und Ausgleichsgetriebe 1 bzw. die Motor-und Getriebeeinheit mit einem Elektromotor 8 und einem koaxial an diesem angeflanschten Übersetzungs- und Ausgleichsgetriebe 1. Hierbei ist die Motorausgangswelle 11 des Elektromotors 8 mit der Eingangswelle 2 des Getriebes 1 verbunden und als Hohlwelle ausgebildet, wobei die Hohlwelle von einer der Ausgangswellen 3 des Getriebes koaxial durchsetzt wird.

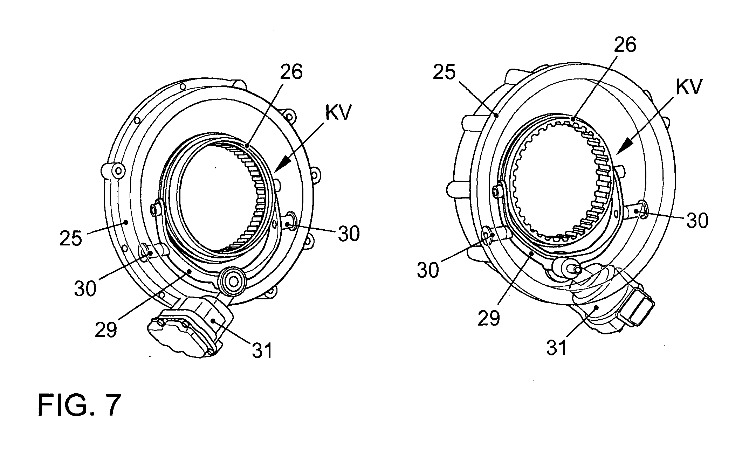

Fig. 7 zeigt schließlich in schematischer Darstellung die Realisierung bzw. Betätigung des Koppelringes 26, der auch als "Synchronring" bezeichenbar ist. Gut erkennbar in Fig. 7 ist der Koppelring 26 der entsprechend geführt wird durch eine Schaltgabel 29, die im Gehäuse 25 wiederum an zwei Lagerpunkten 30 schwenkbar gelagert ist und die Schaltgabel 29 selbst über einen Stellmotor 31 betätigbar ist. Über die Betätigung des Stellmotors 31 kann die Schaltgabel 29 entsprechend leicht verschwenkt werden, wodurch der Koppelring 26 axial entsprechend verschiebbar ist.

Mit dem hier erfindungsgemäß dargestellten Übersetzungs- und Ausgleichsgetriebe 1 können entscheidende Vorteile erzielt werden, die bereits eingangs teilweise erwähnt sind, hierauf darf nochmals verwiesen werden, zusätzlich darf aber nochmals folgendes ausgeführt werden:
Die dargestellte Kopplungsvorrichtung KV kann bauraumneutral in das Übersetzungs- und Ausgleichsgetriebe 1 integriert werden. Hierzu können gleiche Flanschlagen und/oder gleiche Anschlüsse sowie Lagerflächen verwendet werden, sowie auch bereits bestehende Verzahnungen der jeweiligen Wellen genutzt werden. Das Umschalten der Gangstufen von der ersten zur zweiten Gangstufe kann dann insbesondere auch lastfrei erfolgen, wobei die Relativdrehzahlen vom Elektromotor 8 synchronisiert werden. In der Neutralstellung der Kopplungsvorrichtung KV ist eine entsprechende Abkopplung des Getriebes vom Elektromotor 8 realisiert, dieses ist auch bei hohen Drehmomenten ermöglicht. Die Betätigung der Kopplungsvorrichtung KV, insbesondere des Koppelringes 26 wird über einen separaten Stellmotor 31 (mechanisch, elektrisch oder auch hydraulisch) entsprechend realisiert, wobei auch die Möglichkeit der manuellen Abkopplung zum Abschleppen des Fahrzeuges gegeben ist.

Dadurch, dass nun zwei Gangstufen im Übersetzungs- und Ausgleichsgetriebe 1 realisiert sind ergibt sich eine höhere Flexibilität des Gesamtgetriebes und bessere Einsatzmöglichkeiten, insbesondere führt die Realisierung der zweiten Gangstufe, nämlich die Kopplung des Hohlrades 19 der Eingangsstufe 6 mit dem Planetenträgern 18 dieser Planetenstufe zur Realisierung der zweiten Gangstufe, wobei dann die Eingangsstufe 6 in diesem Fall "als Block" umläuft und für die gesamte Übersetzung im wesentlichen nur noch die Laststufe 7 verantwortlich ist.

### Bezugszeichenliste

- 1: Übersetzungs- und Ausgleichsgetriebe
- 2: Eingangswelle
- 3: Ausgangswelle
- 4: Ausgangswelle
- 5: Stirnraddifferential
- 6: Eingangsstufe
- 7: Laststufe
- 8: Elektromotor
- 9: Rad
- 10: Rad
- 11: Ausgangswelle des Elektromotors
- 12: Sonnenrad der Eingangsstufe
- 13: Hohlrad der Laststufe
- 14: Sonnenrad der Laststufe
- 15: Steg der Eingangsstufe
- 16: Planetenrad der Eingangsstufe
- 17: Planetenrad der Lastsstufe
- 18: Planetenträger der Eingangsstufe
- 19: Hohlrad der Eingangsstufe
- 20: Steg der Laststufe
- 21: Planetenräder
- 22: Planetenräder
- 23: Parksperrenrad
- 24: Steg, Parksperrenwelle
- 25: Gehäuse
- 26: Koppelring
- 27: Koppelrad
- 28: Gehäusering
- 29: Schaltgabel
- 30: Lagerpunkte
- 31: Stellmotor
- KV: Kopplungsvorrichtung

## Patentansprüche

1. Übersetzungs- und Ausgleichsgetriebe (1) mit einem Gehäuse (25), mit einer Eingangswelle (2) und zwei koaxial zu der Eingangswelle (2) angeordneten Ausgangswellen (3, 4), wobei ein Übersetzungsabschnitt und ein Ausgleichsabschnitt (5) vorgesehen sind, wobei der Übersetzungsabschnitt zwei Planetenstufen aufweist, nämlich eine Eingangsstufe (6) und eine Laststufe (7), wobei das Sonnenrad (12) der Eingangsstufe mit der Eingangswelle (2) wirksam verbunden ist, wobei die Laststufe (7) ein gehäusefestes Hohlrad (13) aufweist und deren Sonnenrad (14) über einen Steg (15) mit mindestens einem Planetenrad (16) der Eingangsstufe (6) wirksam verbindbar bzw. verbunden ist und wobei mindestens ein Planetenrad (17) der Laststufe über einen Steg (20) wirksam mit einer Eingangswelle des Ausgleichsabschnitt (5) verbunden ist, über eine entsprechend vorgesehene und/oder angeordnete Kopplungsvorrichtung (KV) das Hohlrad (19) der Eingangsstufe (6) wirksam und drehfest mit dem Gehäuse (25) oder mit einem Planetenträger (18) des Planetenrades (16) der Eingangsstufe (6) koppelbar bzw. entkoppelbar ist **dadurch gekennzeichnet, dass** die Kopplungsvorrichtung (KV) einen Koppelring (26), ein Koppelrad (27) und einen Gehäusering (28) aufweist.

2. Übersetzungs- und Ausgleichsgetriebe nach Anspruch 1, **dadurch gekennzeichnet, dass** die Kopplungsvorrichtung (KV) so ausgebildet und/oder ausgeführt ist, dass die Kopplung bzw. Entkopplung der entsprechenden Elemente über vorgesehene Formschlusselemente realisiert wird, insbesondere daher eine formschlüssige Kopplung realisiert wird.

3. Übersetzungs- und Ausgleichsgetriebe nach einem der vorstehenden Ansprüche, **dadurch gekennzeichnet, dass** der Steg (24) des Planetenrades (16) der Eingangsstufe (6) mit einem Parksperrenstirnrad (23) verbunden ist, welches mit einer im Gehäuse (25) vorgesehenen Parksperrenvorrichtung in Eingriff steht.

4. Übersetzungs- und Ausgleichsgetriebe nach einem der vorstehenden Ansprüche, **dadurch gekennzeichnet, dass** der Koppelring (26) axial auf dem Hohlrad (19) verschiebbar angeordnet ist und der Koppelring (26) und das Hohlrad (19) jeweils eine miteinander in Eingriff stehende Steckverzahnung aufweisen.

5. Übersetzungs- und Ausgleichsgetriebe nach einem der vorstehenden Ansprüche, **dadurch gekennzeichnet, dass** das Koppelrad (27) wirksam mit dem oder den Planetenträger (18) bzw. Planetenträgern der Planetenräder (16) der Eingangsstufe (6) verbunden ist und dass an dem Außenumfang des Koppelrades (27) eine zu der Steckverzahnung des Koppelringes (26) korrespondierende Verzahnung vorgesehen ist.

6. Übersetzungs- und Ausgleichsgetriebe nach einem der vorstehenden Ansprüche, **dadurch gekennzeichnet, dass** zur wirksamen Kopplung der Koppelring (26) über das Koppelrad (27) verschiebbar ist.

7. Übersetzungs- und Ausgleichsgetriebe nach einem der vorstehenden Ansprüche, **dadurch gekennzeichnet, dass** der Gehäusering (28) drehfest am oder im Gehäuse (25) angeordnet und/oder befestigt ist und eine Innenverzahnung aufweist.

8. Übersetzungs- und Ausgleichsgetriebe nach einem der vorstehenden Ansprüche, **dadurch gekennzeichnet, dass** der Koppelring (26) am äußeren Umfang eine mit der Innenverzahnung des Gehäuseringes (28) in Eingriff bringbare Außenverzahnung aufweist und zur wirksamen Kopplung der Koppelring (26) zumindest teilweise in den Gehäusering (28) einschiebbar ist.

9. Motor- und Getriebeeinheit mit einem Elektromotor (8) und einem koaxial an diesem angeflanschten Übersetzungs- und Ausgleichsgetriebe (1) nach einem der vorstehenden Ansprüche, wobei eine Motorausgangswelle (11) des Elektromotors (8) mit der Eingangswelle (2) des Getriebes (1) verbunden und als Hohlwelle ausgebildet ist, wobei die Hohlwelle von einer der Ausgangswellen (3) des Getriebes koaxial durchsetzt wird.

## Claims

1. Speed-changing and differential transmission (1) having a housing (25), having an input shaft (2) and two output shafts (3, 4), arranged coaxially with the input shaft (2), wherein a speed-changing section and a differential section (5) are provided, wherein the speed-changing section has two planetary stages, namely an input stage (6) and a load stage (7), wherein the sun wheel (12) of the input stage is operatively connected to the input shaft (2), wherein the load stage (7) has an annulus (13) fixed in relation to the housing and the sun wheel (14) of which load stage can be or is operatively connected to at least one planet wheel (16) of the input stage (6) by means of a planet carrier (15) and wherein at least one planet wheel (17) of the load stage is operatively connected via a spider (20) to an input shaft of the differential section (5), the internal gear (19) of the input stage (6) can be coupled and decoupled operatively and fixedly so as to corotate to and from the housing (25) or to and from a planet carrier (18) of the planet wheel (16) of the input stage (6) via a correspondingly provided and/or arranged coupling apparatus (KV), **characterized in that** the coupling apparatus (KV) has a coupling ring (26), a coupling wheel (27) and a housing ring (28).

2. Speed-changing and differential transmission according to Claim 1, **characterized in that** the coupling device (KV) is designed and/or embodied in such a way that the coupling or decoupling of the corresponding elements is achieved by means of positive engagement elements that are provided and, in particular, positive coupling is therefore achieved.

3. Speed-changing and differential transmission according to one of the preceding claims, **characterized in that** the planet carrier (24) of the planet wheel (16) of the input stage (6) is connected to a parking lock end wheel (23), which is in engagement with a parking lock device provided in the housing (25).

4. Speed-changing and differential transmission according to one of the preceding claims, **characterized in that** the coupling ring (26) is arranged in such a way as to be movable axially on the annulus (19), and the coupling ring (26) and the annulus (19) each have an inter-engaging set of splines.

5. Speed-changing and differential transmission according to one of the preceding claims, **characterized in that** the coupling wheel (27) is operatively connected to the planet carrier (18) or planet carriers (18) of the planet wheels (16) of the input stage (6) and **in that** on the outer circumference of the coupling wheel (27) a set of teeth corresponding to the set of splines of the coupling ring (26) is provided.

6. Speed-changing and differential transmission according to one of the preceding claims, **characterized in that** the coupling ring (26) can be moved over the coupling wheel (27) for operative coupling.

7. Speed-changing and differential transmission according to one of the preceding claims, **characterized in that** the housing ring (28) is arranged and/or fastened fixedly on or in the housing (25) so as to rotate with it, and has an internal toothing system.

8. Speed-changing and differential transmission according to one of the preceding claims, **characterized in that** the coupling ring (26) has an external toothing system on the outer circumference, which external toothing system can be brought into engagement with the internal toothing system of the housing ring (28), and the coupling ring (26) can be pushed at least partially into the housing ring (28) for operative coupling.

9. Motor and transmission unit, having an electric motor (8) and a speed-changing and differential transmission (1) according to one of the preceding claims flanged coaxially thereto, wherein a motor output shaft (11) of the electric motor (8) is connected to the input shaft (2) of the transmission (1) and is designed as a hollow shaft, wherein one of the output shafts (3) of the transmission passes coaxially through the hollow shaft.

## Revendications

1. Transmission avec différentiel (1) avec un boîtier (25), avec un arbre d'entrée (2) et deux arbres de sortie (3, 4) disposés coaxialement à l'arbre d'entrée (2), dans laquelle il est prévu une partie de transmission et une partie de différentiel (5), dans laquelle la partie de transmission présente deux étages planétaires, à savoir un étage d'entrée (6) et un étage de charge (7), dans laquelle la roue solaire (12) de l'étage d'entrée est reliée efficacement à l'arbre d'entrée (2), dans laquelle l'étage de charge (7) présente une couronne (13) solidaire du boîtier et sa roue solaire (14) peut être ou est reliée efficacement par une nervure (15) à au moins une roue planétaire (16) de l'étage d'entrée (6) et dans laquelle au moins une roue planétaire (17) de l'étage de charge est reliée efficacement par une nervure (20) à un arbre d'entrée de la partie de différentiel (5), la couronne (19) de l'étage d'entrée (6) peut être couplée ou découplée efficacement et solidairement au boîtier (25) ou à un porte-satellites (18) de la roue planétaire (16) de l'étage d'entrée (6) au moyen d'un dispositif de couplage (KV) prévu et/ou disposé de manière correspondante, **caractérisée en ce que** le dispositif de couplage (KV) présente une bague de couplage (26), une roue de couplage (27) et une bague de boîtier (28).

2. Transmission avec différentiel selon la revendication 1, **caractérisé en ce que** le dispositif de couplage (KV) est configuré et/ou réalisé de telle manière que le couplage ou le découplage des éléments correspondants soit réalisé au moyen d'éléments à emboîtement prévus, en particulier qu'un couplage par emboîtement soit dès lors réalisé.

3. Transmission avec différentiel selon l'une quelconque des revendications précédentes, **caractérisé en ce que** la nervure (24) de la roue planétaire (16) de l'étage d'entrée (6) est reliée à une roue droite de frein de stationnement (23), qui est en prise avec un dispositif de frein de stationnement prévu dans le boîtier (25).

4. Transmission avec différentiel selon l'une quelconque de revendications précédentes, **caractérisée en ce que** la bague de couplage (26) est disposée de façon coulissante sur la couronne (19) et la bague de couplage (26) et la roue creuse (19) présentent une denture d'emboîtement en prise l'une avec l'autre.

5. Transmission avec différentiel selon l'une quelconque des revendications précédentes, **caractérisée en ce que** la roue de couplage (27) est reliée efficacement au porte-satellites (16) ou aux porte-satellites des roues planétaires (18) de l'étage d'entrée (6) et **en ce qu'**il est prévu sur la périphérie extérieure de la roue de couplage (27) une denture correspondant à la denture d'emboîtement de la bague de couplage (26).

6. Transmission avec différentiel selon l'une quelconque des revendications précédentes, **caractérisée en ce que** la bague de couplage (26) est coulissante sur la roue de couplage (27) en vue d'un couplage efficace.

7. Transmission avec différentiel selon l'une quelconque des revendications précédentes, **caractérisée en ce que** la bague de boîtier (28) est disposée et/ou fixée de façon solidaire en rotation sur ou dans le boîtier (25) et présente une denture intérieure.

8. Transmission avec différentiel selon l'une quelconque des revendications précédentes, **caractérisée en ce que** la bague de couplage (26) présente à la périphérie extérieure une denture extérieure pouvant venir en prise avec la denture intérieure de la bague de boîtier (28) et la bague de couplage (26) peut être insérée au moins en partie dans la bague de boîtier (28) en vue d'un couplage efficace.

9. Unité de moteur et de transmission avec un moteur électrique (8) et une transmission avec différentiel (1) selon l'une quelconque des revendications précédentes bridée coaxialement à celui-ci, dans laquelle l'arbre d'entrée de moteur (11) du moteur électrique (8) est relié à l'arbre d'entrée (2) de la transmission (1) et est formé par un arbre creux, dans laquelle l'arbre creux est traversé coaxialement par un des arbres de sortie (3) de la transmission.
